# EUROPEAN PATENT SPECIFICATION

(11) **EP 2 418 101 B1**
(45) Date of publication and mention of the grant of the patent: **16.01.2013**
(21) Application number: 11006223.9
(22) Date of filing: 28.07.2011
(51) Int. Cl.: B60C 11/04, B60C 11/00

(54) **Heavy duty pneumatic tire**
Schwerlastreifen
Pneumatique du type poids-lourde

(30) Priority: 10.08.2010 JP 2010179641
(43) Date of publication of application: 15.02.2012
(73) Proprietor: Sumitomo Rubber Industries, Ltd., Hyogo-ken (JP)
(72) Inventor: Atake, Ikuo, Hyogo 651-0072 (JP); Kishida, Masahiro, Hyogo 651-0072 (JP)
(74) Representative: Manitz, Finsterwald & Partner GbR

(56) References cited:
- EP-A1- 1 995 081
- WO-A1-2009/084666
- WO-A1-2011/121421

## Description

### Background of the invention

The present invention relates to a pneumatic tire, more particularly to an arrangement of a longitudinal groove having a specific structure and axially inner oblique grooves connected thereto capable of improving the noise performance of a heavy duty tire.

All-season heavy-duty tires for use in trucks, buses and the like are usually provided in the tread portion with a block type tread pattern defined by tread grooves such as circumferentially extending longitudinal grooves and lateral grooves extending therefrom.

When compared with passenger car tires and the like, the tread grooves of a heavy duty tire are relatively wide and deep, therefore, such grooves are liable to generate noise sound during running.

In the case of the lateral grooves, the air in the lateral grooves is compressed when the lateral grooves come into the ground during rolling and the air is jetted out. Thus, so called pumping sound noise is generated. Further, the lateral groove edges hit the road surface, and so called pattern pitch noise is generated.

In the case of the longitudinal grooves, the longitudinal groove in the ground connecting patch forms a tube with both ends opened, and the air in the tube is excited by the pumping sound and pattern pitch noise and the tube is resonated, and so called resonance sound noise is generated.

In order to reduce such noise sound, in European patent application No. EP-1995081-A1, as shown in Fig.6(a) and Fig.6(b), a longitudinal groove (a) provided in the groove bottom (b) with a sound insulation wall (e) having a height (d) same as the depth (c) of the longitudinal groove (a) has been proposed by the assignee of the present invention. This sound insulation wall can reduce the pumping sound and resonance sound. EP 1 995 081 A1 dicloses a heavy duty pneumatic tire having the features of the preamble of claim 1.

In recent years, however, demand for quiet tires is very high, and the above-mentioned sound insulation wall is not sufficient for such demand.

### Summary of the Invention

It is therefore, an object of the present invention to provide a heavy duty pneumatic tire, in which the pumping noise and resonance sound noise and further the pattern pitch noise are effectively suppressed, and the overall noise sound is further reduced to satisfy the recent demand for quiet tires.

According to the present invention, a heavy duty pneumatic tire comprises a tread portion provided with
a circumferentially continuously extending longitudinal groove disposed on each side of the tire equator,
a plurality of axially inner oblique grooves extending axially inwardly from the longitudinal groove, while inclining at an angle of from 20 to 40 degrees with respect to the tire axial direction, and
a sound insulation wall disposed within the longitudinal groove so as to rise from the groove bottom independently from the groove sidewalls,
the sound insulation wall extends continuously in the circumferential direction in a zigzag manner so as to have axially inner points and axially outer points at turning points of the zigzag, and
the distance between the sound insulation wall and the axially inner edge of the longitudinal groove is varied periodically in the tire circumferential direction so that the distance becomes minimal at the junctions of the longitudinal groove and the axially inner oblique grooves.

As described, the axially inner oblique grooves are inclined at an angle of from 20 to 40 degrees with respect to the tire axial direction, therefore, the deformation of the axially inner oblique grooves when contacting with the ground becomes gradual, and the flow velocity of the air jetted out of the lateral grooves (into the longitudinal groove for instance) is decreased, and thereby the pumping sound noise can be reduced. Further, the contact of the edges of the oblique grooves become gradual, therefore, the pattern pitch noise can be reduced.

Furthermore, by the sound insulation wall, the volume of the longitudinal groove is decreased, therefore, the occurrence of the resonance sound noise can be controlled. Still furthermore, since the distance between the sound insulation wall and the axially inner edge of the longitudinal groove becomes minimal at the junctions, the air flow from the axially inner oblique grooves into the longitudinal groove is controlled not to excite the air in the longitudinal groove, and thereby the resonance sound noise can be completely prevented. Accordingly, it is possible to improve the noise performance to satisfy the recent demand.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflate to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (AUstralia),STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load capacity" in ETRTO, the maximum value given in the above-mentioned table in TRA or the like.

The tread width Tw is the axial distance between the tread edges Te measured in the normally inflated unloaded condition.

The tread edges Te are the axial outermost edges of the ground contacting patch (camber angle=0) in the normally inflated loaded condition.

The term "groove width" means a width measured perpendicularly to the longitudinal direction of the groove concerned in the normally inflated unloaded condition. And the groove width refers to that measured at the open groove top unless otherwise noted.

### Brief Description of the Drawings

Fig.1 is a cross sectional view of a heavy duty pneumatic tire according to an embodiment of the present invention, under its normally inflated unloaded condition.
Fig.2 is a developed view of the tread portion thereof.
Fig.3 is a cross sectional view of the longitudinal groove.
Fig.4 is a plan view of the longitudinal groove.

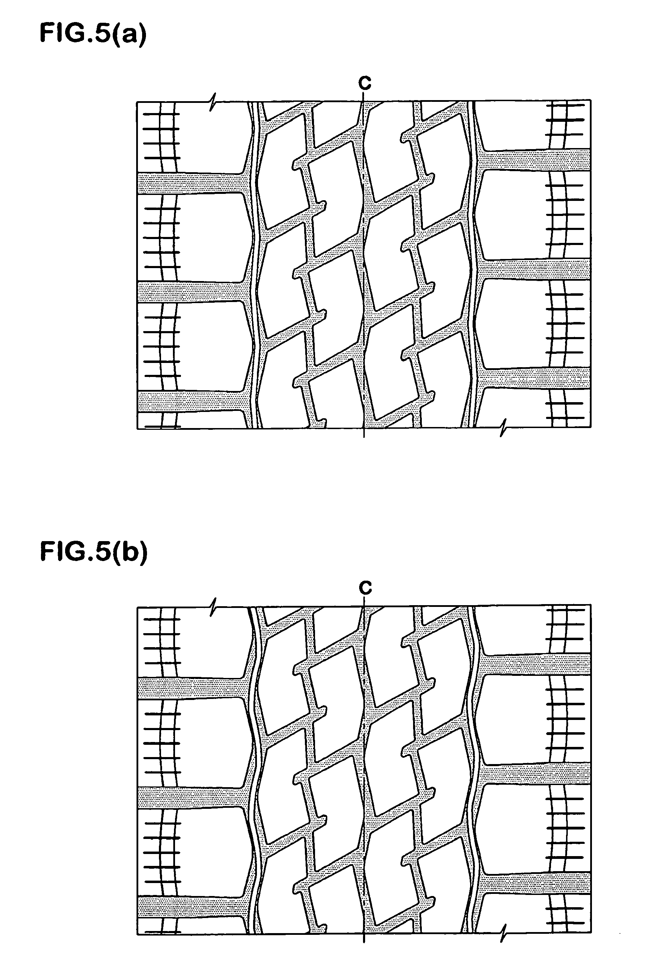

Figs.5(a) and 5(b) are developed views of tread portions of comparative examples.

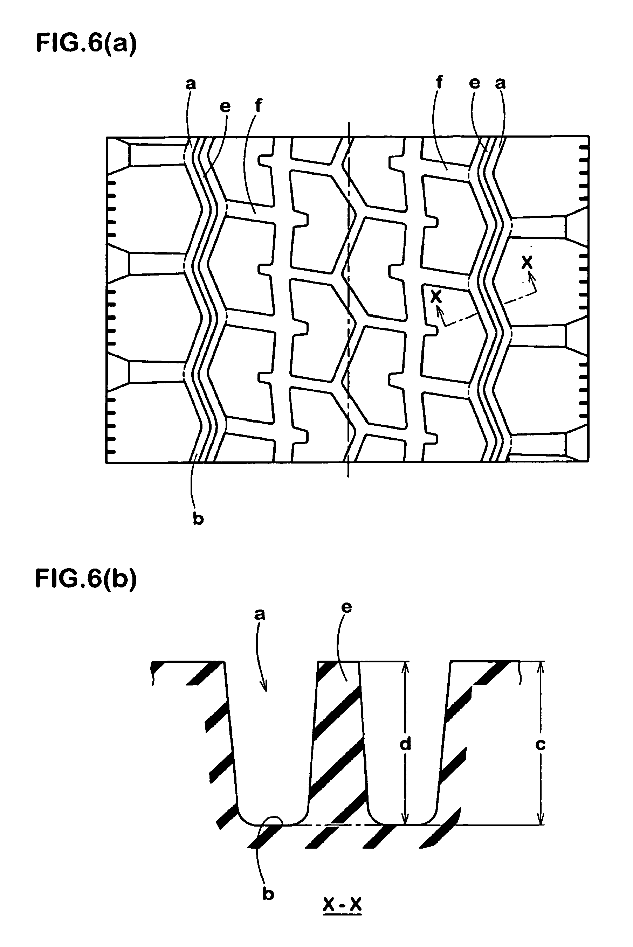

Fig.6(a) is a developed view of a prior-art tread portion.
Fig.6(b) is a cross sectional view taken along line x-x of Fig.6(a).

### Description of the Preferred Embodiments

Embodiments of the present invention will now be described in detail in conjunction with the accompanying drawings.

The heavy duty pneumatic tire 1 according to the present invention comprises a tread portion 2, a pair of axially spaced bead portions 4 each with a bead core 5 therein, a pair of sidewall portions 3 extending between the tread edges and the bead portions, a carcass 6 extending between the bead portions 4, and a belt 7 disposed radially outside the carcass 6 in the tread portion 2.

The carcass 6 comprises at least one ply 6A of cords arranged radially at an angle of 90 to 75 degrees with respect to the tire equator C, and extending between the bead portions 4 through the tread portion 2 and sidewall portions 3, and turned up around the bead core 5 in each bead portion 4 from the inside to the outside of the tire so as to form a pair of turned up portions 6b and a main portion 6a therebetween.
In this embodiment, the carcass 6 is composed of a single carcass ply 6A, and the carcass cords are steel cords.

The belt 7 comprises at least two cross breaker plies, each made of parallel cords laid at an angle of from 15 to 45 degrees with respect to the tire equator C.
In this embodiment, the belt 7 is composed of four breaker plies 7A, 7B, 7c and 7D, and steel cords are used as the breaker ply cords.

The tread portion 2 in this embodiment is provided with five circumferentially continuously extending longitudinal grooves: an axially inner longitudinal groove 9 disposed direction along the tire equator C, a pair of axially outermost longitudinal grooves 10 disposed one on each side of the longitudinal groove 9, and a pair of middle longitudinal grooves 11 between the longitudinal grooves 9 and 10.

The longitudinal grooves 9, 10 and 11 each have a groove top width w1 and a groove depth D1. In view of the drainage, wear resistance and steering stability, the groove top width w1 is preferably set in a range of not less than 2 %, more preferably not less than 3 %, but not more than 5 %, more preferably not more than 4 % of the tread width TW. And the groove depth D1 is preferably set in a range of not less than 2 %, more preferably not less than 4 %, but not more than 12 %, more preferably not more than 8 % of the tread width TW. In this embodiment, the axially outermost longitudinal groove 10 is wider than the axially inner longitudinal groove 9 which is wider than the middle longitudinal groove 11.

As to the longitudinal grooves 9, 10 and 11, straight grooves can be employed.

But, in this embodiment, zigzag grooves are employed because the groove edges are increased in the axial component and thereby the traction performance can be improved. The axially outermost longitudinal groove 10 is made up of alternately inclining segments having substantially same lengths. The axially inner longitudinal groove 9 is made up of alternately inclining long segments and short segments. The middle longitudinal groove 11 is made up of alternately inclining long segments and short segments, wherein the ratio of the length of the short segment to the length of the long segment is larger than that of the axially inner longitudinal groove 9.

Preferably, the inclination angles of the equi-length zigzag segments (angle θ2 of longitudinal grooves 10).and the inclination angles of the long zigzag segments (angle θ1 of longitudinal groove 9 and angle θ3 of longitudinal groove 11) are set in a range of not more than 20 degrees with respect to the circumferential direction. If more than 20 degrees, the tread portion 2 is decreased in the rigidity in the tire circumferential direction, and there is a tendency that the straight running stability and steering stability are deteriorated.

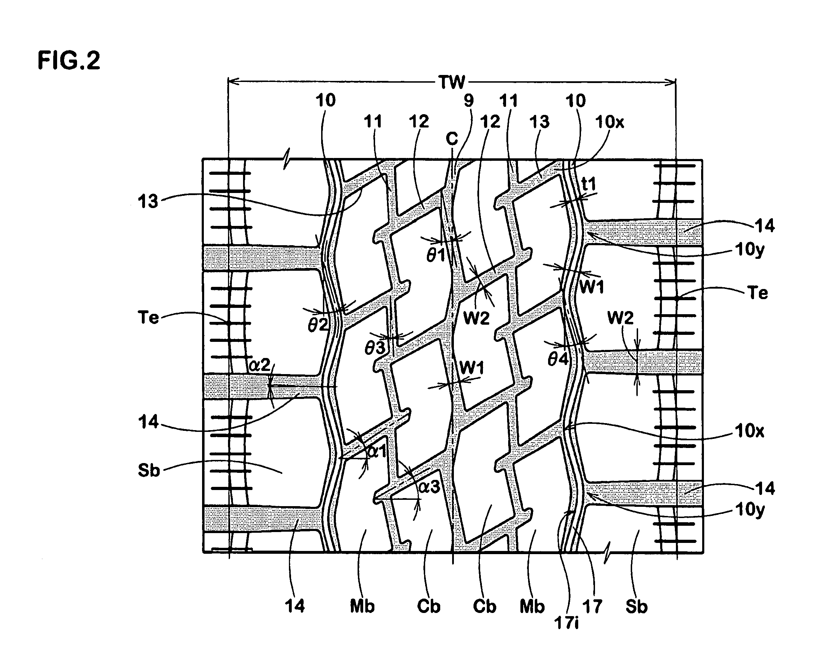

As shown in Fig.2, the tread portion 2 in this embodiment is provided with
crown oblique grooves 12 extending between the inner longitudinal groove 9 and middle longitudinal grooves 11,
axially inner oblique grooves 13 extending between the middle longitudinal grooves 11 and axially outer longitudinal grooves 10, and
axially outer shoulder lateral grooves 14 extending between the axially outer longitudinal grooves 10 and tread edges Te.

Therefore, the tread portion 2 is provided with a block pattern made up of
center blocks cb between the axially inner longitudinal groove 9 and middle longitudinal grooves 11,
middle blocks Mb between the middle longitudinal grooves 11 and axially outer longitudinal grooves 10, and
shoulder blocks Sb between the axially outer longitudinal grooves 10 and tread edges Te.

The axially inner oblique grooves 13 are connected to the axial inwardly located zigzag turning points 10x of the axially outer longitudinal grooves 10 in order to secure the rigidity of the shoulder blocks Sb.

The axially outer shoulder lateral grooves 14 are connected to the axial outwardly located zigzag turning points 10y of the axially outer longitudinal grooves 10 in order to secure the rigidity of the middle blocks Mb.

The grooves 12, 13 and 14 each have a groove top width W2 and a groove depth D2. In view of the drainage and steering stability, the groove top width W2 is preferably set in a range of not less than 2 %, more preferably not less than 3 %, but not more than 6 %, more preferably not more than 5 % of the tread width TW. And the groove depth D2 is preferably set in a range of not less than 1 %, more preferably not less than 1.5 %, but not more than 3 %, more preferably not more than 2.5 % of the tread width TW.

In this embodiment, all of the oblique grooves 12 and 13 have substantially same widths less than the width of the axially outer shoulder lateral grooves 14.

The axially inner oblique grooves 13 are inclined at an angle α1 with respect to the tire axial direction. The angle α1 is preferably set in a range of not less than 20 degrees, more preferably not less than 25 degrees, but not more than 40 degrees, more preferably not more than 35 degrees.

Through various tests, the inventor found that, among the longitudinal grooves, the axially outer longitudinal grooves 10 have a great effect on the noise performance, therefore, it is important for the noise performance to improve the air flow in the axially outer longitudinal groove 10. when the axially inner oblique groove 13 comes into contact with the ground, the air therein flows into the axially outer longitudinal groove 10. By limiting the angle α1 of the axially inner oblique grooves 13 within the above-mentioned range, the contact of the oblique groove with the ground becomes gradual, therefore, the velocity of the air flow from the lateral groove is decreased. As a result, the pumping sound generated by the axially inner oblique groove 13 is reduced, and further, the exciting of the air in the longitudinal groove is reduced and the occurrence of the resonance is prevented.

If the angle α1 is less than 20 degrees, the velocity of the air flow increases and it becomes difficult to reduce the pumping sound noise. If the angle α1 is more than 40 degrees, as the blocks divided by the oblique grooves 13 are decreased in the rigidity, vibration or deformation of the blocks is increased, therefore the air in the adjacent grooves is liable to be excited which result in the generation of noise sound. Further, due to the decreased rigidity and the increased deformation of the blocks, the resistance to wear and steering stability are liable to be deteriorated.

As to the number of the axially inner oblique grooves 13, it is preferable that 35 to 65 grooves are circumferentially arranged on each side of the tire equator c. More preferably the number is not less than 40, still more preferably not less than 42, but not more than 60, still more preferably not more than 48.

If the number is more than 65, the middle blocks Mb are decreased in the rigidity and their deformation becomes increased, therefore, there is a tendency that the pumping sound noise increases. If less than 35, as the middle blocks Mb are increased in the rigidity, impact sound generated when the block edges hit the road surface has a tendency to increase the sound pressure level, and thereby the noise performance is deteriorated.

The crown oblique grooves 12 are preferably inclined at an angle α3 of from 20 to 40 degrees with respect to the tire axial direction for the same reasons as the axially inner oblique grooves 13.

In this embodiment, the axially inner oblique grooves 13 and crown oblique groove 12 extends straight, inclining in the same direction at the same angle in order to smoothen the drainage and improve the wet performance.

The oblique grooves 12 and 13 are connected to the longitudinal groove 11 as if the oblique grooves 12 and 13 respectively overlap the short zigzag segments of the longitudinal groove 11. The oblique grooves 12 are connected to the zigzag turning points of the longitudinal groove 9.

The axially outer shoulder lateral grooves 14 are not inclined, and extend at an angle α2 of not more than 5 degrees with respect to the tire axial direction in order to increase the lateral stiffness (rigidity) of the shoulder blocks Sb and to thereby provide steering stability during cornering.

According to the present invention, the longitudinal grooves are provided with a sound insulation wall 17.

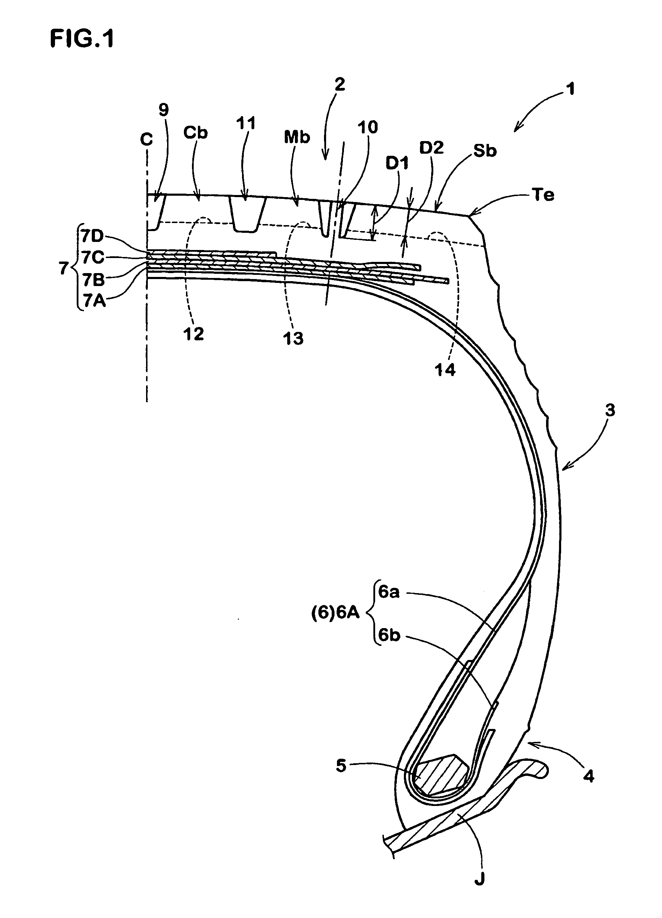

In this embodiment, as shown in Figs.1, 2 and 3, only the axially outermost longitudinal grooves (namely, longitudinal grooves 10) are each provided in its groove bottom 10u with a sound insulation wall 17 rising radially outwardly from the groove bottom 10u. This is because the axially outermost longitudinal grooves have the greatest influence on the noise performance, and the groove width is large enough to cause resonance as the zigzag is gentle. It is of course possible that the sound insulation wall 17 is formed in other longitudinal groove if needed, for example, only the middle longitudinal grooves 11, or only the axially outer longitudinal grooves 10 and middle longitudinal grooves 11.

The sound insulation wall 17 extends continuously in the tire circumferential direction within the longitudinal groove.

The cross-sectional shape of the sound insulation wall 17 is constant along the entire length of the sound insulation wall 17.

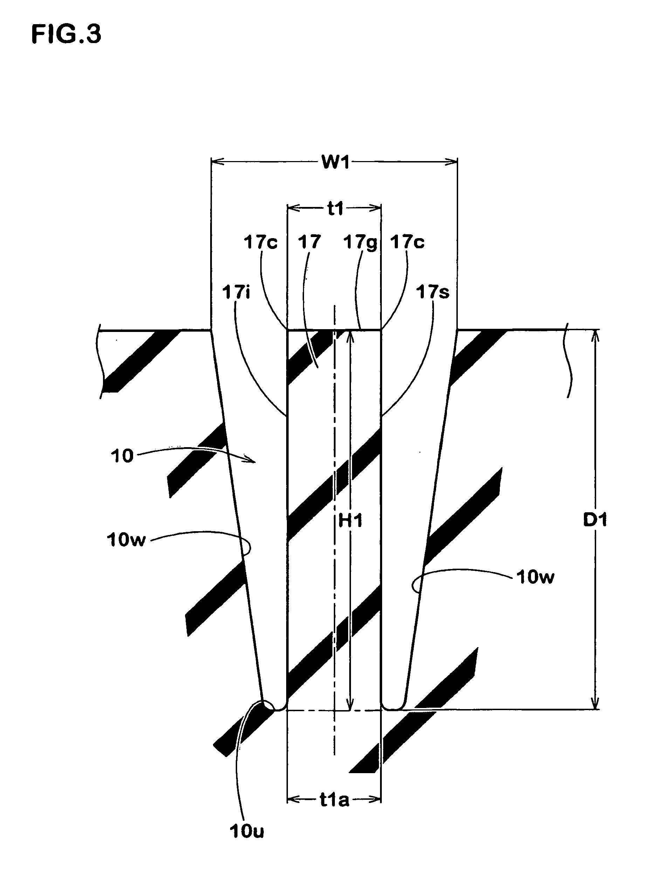

The sound insulation wall 17 has a top surface 17g, an axially inner wall surface 17i extending from the axially inner edge 17c of the top surface 17g to the groove bottom 10u, and an axially outer wall surface 17s extending from the axially outer edge 17t of the top surface 17g to the groove bottom 10u. In this example, as shown in Fig.3, the cross sectional shape of the sound insulation wall 17 is a substantially rectangle.

The sound insulation wall 17 extends in the tire circumferential direction in a zigzag manner, preferably smoothly curved wavy manner so that alternating axially inner points 17n and outer points 17p are respectively formed on the axially inner wall surface 17i and outer wall surface 17s at the turning points of the zigzag. In this embodiment, the axially inner points 17n are the axially innermost points, and the axially outer points 17p are the axially outermost points.

The zigzag pitches of the sound insulation wall 17 are same as the zigzag pitches of the axially outer longitudinal groove 10. Thus, the axially inner points 17n are respectively positioned within the circumferential extents 10R of the junctions 10c (opening) of the axially inner oblique grooves 13 and the axially outer longitudinal groove 10.

The axially outer points 17p are respectively positioned within the circumferential extents 10L of the junctions 10d (opening) of the axially outer shoulder lateral grooves 14 and the axially outer longitudinal groove 10.

The maximum angle θ4 of the sound insulation wall 17 with respect to the tire circumferential direction is preferably not less than 3 degrees, more preferably not less than 5 degrees, but not more than 20 degrees, more preferably not more than 10 degrees.

If the maximum angle θ4 is more than 20 degrees, as the deformation of the sound insulation wall 17 during running liable to concentrate at the turning points of zigzag, it becomes difficult to shut off the pumping sound noise from the axially inner oblique grooves 13, and the noise performance is liable to deteriorate.

The axially outer longitudinal groove 10 has a pair of opposed groove sidewalls 10w and a groove bottom 10u extending therebetween. The groove sidewalls 10w are inclined so that the groove width continuously increases from the groove bottom 10u toward the radially outside.

By the sound insulation wall 17, the axially outer longitudinal groove 10 is decreased in the groove volume, and the occurrence of the resonance sound noise is prevented.

By making the sound insulation wall 17 in a zigzag or wavy form, in comparison with a straight form, the surface area of the wall surfaces 17i and 17s is increased, and thereby the effect to attenuate the pumping sound noise is enhanced.

The distance Lm of the sound insulation wall 17 from the axially inner edge 10i of the axially outer longitudinal grooves 10 is varied periodically in the tire circumferential direction so that the distance Lm becomes minimal at the junctions 10c. As the axially inner wall surface 17i of the sound insulation wall 17 comes near the junctions 10c, namely, near the open ends of the axially inner oblique grooves 13, the air flow from the axially inner oblique grooves 13 into the longitudinal groove is effectively controlled not to excite the air in the longitudinal groove. Accordingly, the occurrence of the resonance sound noise can be prevented. Further, even at high frequencies, the occurrence of the standing wave in the axially outer longitudinal groove 10 can be completely prevented.

If the distance Lm at the junctions 10c is too large, the effect of the sound insulation wall 17 to cut the noise sound coming into the longitudinal groove becomes insufficient. If too small, on the other hand, the wet performance is deteriorated, and further the resultant choke part liable to generate pumping sound. Therefore, the distance Lm at the junctions 10d is preferably set in a range of not less than 1 mm, more preferably not less than 1.5 mm, but not more than 5 mm, more preferably not more than 4 mm.

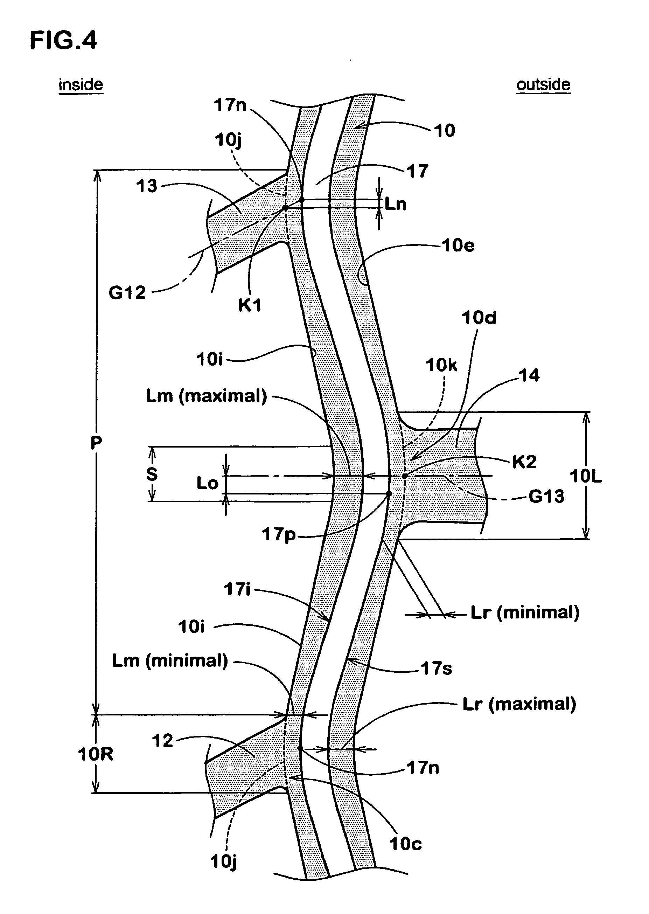

Further, it is preferable that, as shown in Fig.4, the intersecting points K1 (imaginary intersecting points) between the center lines G12 of the axially inner oblique grooves 13 and the axially inner edge 10i (imaginary edge line 10j) of the axially outer longitudinal groove 10 are respectively shifted from the axially inner points 17n of the sound insulation wall 17 in the tire circumferential direction by distances Ln of 1 to 3 mm.

If the distance Ln is less than 1 mm, the water flow from the axially inner oblique grooves 13 to the axially outer longitudinal groove 10 is hindered and the wet performance is deteriorated. If the distance Ln is more than 3 mm, the flow passage from the axially inner oblique groove 13 to the longitudinal groove 10 becomes wide, and it becomes difficult to control the pumping sound noise.

Furthermore, it is preferable that, with respect to each of the axially outer longitudinal grooves 10, the axially inner oblique grooves 13 which extend from the longitudinal groove 10 toward the axially inside are inclined to one circumferential direction, and
the above-mentioned intersecting points K1 are shifted from the axially inner points 17n of the sound insulation wall 17 toward the above-mentioned one circumferential direction.

More generically speaking, the axially inner points 17n are preferably positioned on or close to extensions of the widthwise center lines of the axially outer longitudinal grooves 10 in order to effectively control the air flow from the oblique grooves into the longitudinal groove, not to excite the air in the longitudinal groove.

Also, it is preferable that the distance Lm becomes maximal at a position within a range S between 45 % and 55 % (50+/-5%) of the circumferential pitch length between every two circumferentially-adjacent axially inner points 17n. This range S is included in the above-mentioned circumferential extent 10L of the junction 10d. Namely, the distance Lm is increased at such positions that are farthest from the axially inner points 17n, and as a result, the resistance to water flow of the axially outer longitudinal groove 10 is decreased and the wet performance can be improved.

It is preferable that the distance Lr of the sound insulation wall 17 from the axially outer edge 10e of the axially outer longitudinal groove 10 becomes minimal at the above-mentioned junctions 10d.

It is preferable that the distance Lr at the junctions 10d is set in a range of not less than 1 mm, more preferably not less than 1.5 mm, but not more than 5 mm, more preferably not more than 4 mm, and that the intersecting points K2 (imaginary intersecting point) between the center lines G13 of the axially outer shoulder lateral grooves 14 and the axially outer edge 10e (imaginary edge line 10k) of the axially outer longitudinal groove 10 are shifted from the axially outer points 17p of the sound insulation wall 17 in the tire circumferential direction by a distance Lo of from 0 to 2 mm. Thereby, the transfer of noise sound from the longitudinal groove 10 to the axially outer shoulder lateral groove 14 is hindered, while maintaining drainage and wet performance.

Incidentally, the imaginary edge line 10k and above-mentioned imaginary edge line 10j of the axially outer longitudinal groove 10 can be defined by lines parallel with the opposed axially inner edge 10i and the opposed axially outer edge 10e, respectively.

The height H1 of the sound insulation wall 17 is set in a range of not less than 90 %, preferably not less than 95 %, but not more than 105 %, preferably not more than 100 % of the groove depth D1 of the axially outer longitudinal groove 10. In this embodiment, the height H1 is equal to the groove depth D1. If the height H1 is less than 90 %, it is difficult to shut off the noise sound. If the height H1 is more than 105 %, the sound insulation wall 17 is very liable to broken during running.

Preferably, the ratio t1/t1a of the thickness t1 of the sound insulation wall 17 at the top surface 17g to the thickness t1a of the sound insulation wall 17 at the bottom 10u of the axially outer longitudinal groove 10 is not more than 1.0, preferably less than 1.0, more preferably not more than 0.85, but not less than 0.2, preferably not less than 0.5. In view of the demolding of the vulcanized tire, it is preferable that the sound insulation wall 17 is tapered toward the radially outside, namely, the ratio t1/t1a of less than 1.0 is preferred. However, if the ratio t1/t1a is less than 0.2, wear and cracks are liable to occur at the radially outer end portion. Further, as the rigidity becomes insufficient, it becomes difficult to shut off the noise sound.

As shown in Fig.3, in the cross section of the sound insulation wall 17 taken perpendicular to the longitudinal direction thereof, the thickness t1 of the sound insulation wall 17 at the top surface 17g is preferably set in a range of not less than 10 %, more preferably not less than 20 %, but not more than 50 %, more preferably not more than 40 % of the groove top width w1 of the axially outer longitudinal groove 10.

Therefore, the durability of the sound insulation wall 17 can be maintained for a long time. And a sufficient thickness is provided on the top surface side of the sound insulation wall 17, therefore, leakage of the noise sound is efficiently prevented. As a result, the pumping sound noise coming from the oblique grooves and the resonance sound noise of the longitudinal groove are reduced, the noise performance can be effectively improved.

### comparison Tests

In order to confirm the effects of the present invention, truck/bus tires of size 275/80R22.5 (rim size: 7.50x22.5) having the internal tire structure shown in Fig.1 were prepared and tested for the noise performance and wet performance.

The test tires had the same specifications except for the specifications shown in Table 1.

common specifications are as follows.
Tread width TW: 260 mm
carcass: one ply of steel cords arranged radially at 90 degrees
Belt: four plies of steel cords
Longitudinal grooves (9, 10, 11)
   top width W1: 7 to 12 mm
   depth D1: 14 to 16 mm
oblique grooves (12, 13)
   top width w2: 6 to 8 mm
   depth D2: 14 to 16 mm
sound insulation wall (17)
   height H1: 90 to 105 % of D1
   thickness t1: 10 to 50 % of W1
   thickness ratio t1/t1a: 20 to 100 %

### < Noise performance test >

Using a 1.7 meter dia. test drum provided with an ISO road surface, the test tire inflated to 900 kPa (standard pressure) was run at 40 km/h under a tire load of 23.8 kN (70 % of standard load) in an anechoic chamber, and the A-weighted sound pressure level was measured. The results are indicated in Table 1 by an index based on Embodiment 1 being 100, wherein the larger the index number, the lower the noise level.

### < wet performance test >

2D-type truck provided on all wheels with test tires inflated to 900 kPa was run on a wet asphalt road surface in a tire test course, and the test driver evaluated the running stability. The results are indicated in Table 1 by an index based on Embodiment 1 being 100, wherein the larger the index number, the better the wet performance.

From the test results, it was confirmed that the tires according to the present invention can be improved in the noise performance and wet performance in a well balanced manner.

**Table 1 (1/3)**

| Tire | | Ref. 1 | Ref. 2 | Ref. 3 | Ref. 4 | Ex.1 | Ex.2 |
|---|---|---|---|---|---|---|---|
| Tread pattern | | Fig.5(a) | Fig.5(b) | Fig.2 | Fig.2 | Fig.2 | Fig.2 |
| axially inner oblique groove | | | | | | | |
| | number of grooves | 42 | 42 | 42 | 42 | 42 | 42 |
| | angle α1 (deg.) | 30 | 30 | 10 | 50 | 30 | 20 |
| | distance Lm at junctions (mm) | -- | -- | 2 | 2 | 2 | 2 |
| | distance Ln (sift) (mm) | -- | -- | 2 | 2 | 2 | 2 |

| Test results | | | | | | | |
|---|---|---|---|---|---|---|---|
| | noise performance | 90 | 90 | 92 | 86 | 100 | 96 |
| | wet performance | 70 | 72 | 85 | 105 | 100 | 98 |

**Table 1 (2/3)**

| Tire | | Ex.3 | Ex.4 | Ex.5 | Ex.6 | Ex.7 | Ex.8 | Ex.9 |
|---|---|---|---|---|---|---|---|---|
| Tread pattern | | Fig.2 | Fig.2 | Fig.2 | Fig.2 | Fig.2 | Fig.2 | Fig.2 |
| axially inner oblique groove | | | | | | | | |
| | number of grooves | 42 | 42 | 42 | 42 | 42 | 42 | 42 |
| | angle α1 (deg.) | 40 | 30 | 30 | 30 | 30 | 30 | 30 |
| | distance Lm at junctions (mm) | 2 | 0.5 | 1.2 | 4.5 | 6 | 2 | 2 |
| | distance Ln (sift) (mm) | 2 | 2 | 2 | 2 | 2 | 0 | 1 |

| Test results | | | | | | | | |
|---|---|---|---|---|---|---|---|---|
| | noise performance | 94 | 104 | 102 | 95 | 93 | 102 | 102 |
| | wet performance | 102 | 92 | 94 | 103 | 104 | 93 | 96 |

**Table 1 (3/3)**

| Tire | | Ex.10 | Ex.11 | Ex.12 | Ex.13 | Ex.14 | Ex.15 |
|---|---|---|---|---|---|---|---|
| Tread pattern | | Fig.2 | Fig.2 | Fig.2 | Fig.2 | Fig.2 | Fig.2 |
| axially inner oblique groove | | | | | | | |
| | number of grooves | 42 | 42 | 35 | 39 | 54 | 65 |
| | angle α1 (deg.) | 30 | 30 | 30 | 30 | 30 | 30 |
| | distance Lm at junctions (mm) | 2 | 2 | 2 | 2 | 2 | 2 |
| | distance Ln (sift) (mm) | 3 | 4 | 2 | 2 | 2 | 2 |

| Test results | | | | | | | |
|---|---|---|---|---|---|---|---|
| | noise performance | 96 | 93 | 95 | 99 | 99 | 94 |
| | wet performance | 102 | 103 | 90 | 95 | 102 | 103 |

## Claims

1. A heavy duty pneumatic tire (1) comprising a tread portion (2) provided with
a circumferentially continuously extending longitudinal groove (10) disposed on each side of the tire equator (C),
a plurality of axially inner oblique grooves (13) extending axially inwardly from said longitudinal groover (10), while inclining at an angle (α1) of from 20 to 40 degrees with respect to the tire axial direction, and
a sound insulation wall (17) disposed within said longitudinal groove (10) so as to rise from the groove bottom independently from the groove sidewalls (10w),
the sound insulation wall (17) extends continuously in the circumferential direction in a zigzag manner so as to have axially inner points (10x) and axially outer points (10y) at turning points of the zigzag, **characterized in that**
the distance between the sound insulation wall (17) and the axially inner edge of the longitudinal groove (10) is varied periodically in the tire circumferential direction so that the distance becomes minimal at the junctions of the longitudinal groove (10) with the axially inner oblique grooves (13).

2. The heavy duty pneumatic tire according to claim 1, wherein
the longitudinal groove (10) extends zigzag so that the maximum inclination angle thereof becomes at most 20 degrees with respect the tire circumferential direction,
the axially inner oblique grooves (13) are connected to the longitudinal groove (10) at the axially inwardly located turning points of the zigzag, and
axially outer lateral grooves (14) extend axially outwardly from axially outwardly located turning points (10y) of the zigzag of the longitudinal groove (10).

3. The heavy duty pneumatic tire according to claim 1 or 2, wherein
the intersecting points of the widthwise center lines of the axially inner oblique grooves (13) and the axially inner edge of the longitudinal groove (10) are respectively shifted from said axially inner points (10x) of the sound insulation wall (17) in the tire circumferential direction by 1 to 3 mm.

4. The heavy duty pneumatic tire according to claim 3, wherein
said axially inner oblique grooves (13) are inclined to one circumferential direction from the longitudinal groove (10) towards the axially inside, and
said intersecting points are shifted from said axially inner points (10x) of the sound insulation wall (17) towards said one circumferential direction.

5. The heavy duty pneumatic tire according to any one of claims 1-4, wherein
the number of said axially inner oblique grooves (13) connected to each said longitudinal groove (10) is 35 to 65.

6. The heavy duty pneumatic tire according to any one of claims 1-5, wherein
the tread portion (2) is provided with at least one additional longitudinal (9, 11) groove not provided with the sound insulation wall.

7. The heavy duty pneumatic tire according to claim 6, wherein
said at least one additional longitudinal (9, 11) groove is disposed between said longitudinal grooves (13) provided with the sound insulation wall (17).

## Patentansprüche

1. Schwerlast-Luftreifen (1), der einen Laufflächenabschnitt (2) umfasst, der versehen ist mit
einer sich in Umfangsrichtung durchgehend erstreckenden Längsrille (10), die auf jeder Seite des Reifenäquators (C) angeordnet ist,
einer Vielzahl von axial inneren schrägen Rillen (13), die sich von der Längsrille (10) axial nach innen erstrecken, während sie sich unter einem Winkel (α1) von 20 bis 40 Grad mit Bezug auf die axiale Richtung des Reifens neigen, und
einer Schallisolationswand (17), die in der Längsrille (10) derart angeordnet ist, dass sie unabhängig von den Rillenseitenwänden (10w) von dem Rillengrund (10u) ansteigt,
wobei die Schallisolationswand (17) sich in der Umfangsrichtung durchgehend zickzackartig erstreckt, so dass sie axial innere Punkte (10x) und axial äußere Punkte (10y) an Wendepunkten des Zickzacks aufweist,
**dadurch gekennzeichnet, dass**
der Abstand zwischen der Schallisolationswand (17) und der axial inneren Kante der Längsrille (10) periodisch in der Umfangsrichtung des Reifens verändert ist, so dass der Abstand an den Übergängen der Längsrille (10) mit den axial inneren schrägen Rillen (13) minimal wird.

2. Schwerlast-Luftreifen nach Anspruch 1, wobei
die Längsrille (10) sich zickzackförmig erstreckt, so dass ihr maximaler Neigungswinkel höchstens 20 Grad mit Bezug auf die Umfangsrichtung des Reifens wird,
die axial inneren schrägen Rillen (13) mit der Längsrille (10) an den axial innen gelegenen Wendepunkten des Zickzacks verbunden sind, und
axial äußere Querrillen (14) sich von axial außen gelegenen Wendepunkten (10y) des Zickzacks der Längsrille (10) axial nach außen erstrecken.

3. Schwerlast-Luftreifen nach Anspruch 1 oder 2, wobei
die Schnittpunkte der Mittellinien der Breite nach der axial inneren schrägen Rillen (13) und der axial inneren Kante der Längsrille (10) jeweils von den axial inneren Punkten (10x) der Schallisolationswand (17) in der Umfangsrichtung des Reifens um 1 bis 3 mm verschoben sind.

4. Schwerlast-Luftreifen nach Anspruch 3, wobei
die axial inneren schrägen Rillen (13) von der Längsrille (10) in eine Umfangsrichtung zu der axialen Innenseite hin geneigt sind, und
die Schnittpunkte von den axial inneren Punkten (10x) der Schallisolationswand (17) zu der einen Umfangsrichtung hin verschoben sind.

5. Schwerlast-Luftreifen nach einem der Ansprüche 1 bis 4, wobei
die Anzahl der axial inneren schrägen Rillen (13), die mit jeder Längsrille (10) verbunden sind, 35 bis 65 beträgt.

6. Schwerlast-Luftreifen nach einem der Ansprüche 1 bis 5, wobei
der Laufflächenabschnitt (2) mit zumindest einer zusätzlichen (9, 11), nicht mit der Schallisolationswand versehenen Längsrille versehen ist.

7. Schwerlast-Luftreifen nach Anspruch 6, wobei
die zumindest eine zusätzliche (9, 11) Längsrille zwischen den Längsrillen (13), die mit der Schallisolationswand (17) versehen sind, angeordnet ist.

## Revendications

1. Bandage pneumatique de type poids-lourd (1) comprenant une portion formant bande de roulement (2) dotée de
une gorge longitudinale (10) disposée de chaque côté de l'équateur du pneumatique (C),
une pluralité de gorges obliques axialement intérieures (13) s'étendant axialement vers l'intérieur depuis ladite gorge longitudinale (10) tout en s'inclinant sous un angle (α1) de 20 à 40° par rapport à la direction axiale du pneumatique, et
une paroi d'isolation sonore (17) disposée dans ladite gorge longitudinale (10) de manière à se dresser depuis le fond de la gorge (10u) indépendamment des parois latérales (10w) de la gorge,
la paroi d'isolation sonore (17) s'étend en continu dans la direction circonférentielle d'une manière en zigzag, de manière à présenter des points axialement intérieurs (10x) et des points axialement extérieurs (10y) à des points de virage du zigzag,
**caractérisé en ce que** la distance entre la paroi d'isolation sonore (17) et la bordure axialement intérieure de la gorge longitudinale (10) est variée périodiquement dans la direction circonférentielle du pneumatique de telle façon que la distance devient minimale au niveau des jonctions de la gorge longitudinale (10) avec les gorges obliques axialement intérieures (13).

2. Bandage pneumatique de type poids-lourd selon la revendication 1, dans lequel
la gorge longitudinale (10) s'étend en zigzag de telle façon que son angle d'inclinaison maximum devient au maximum 20° par rapport à la direction circonférentielle du pneumatique,
les gorges obliques axialement intérieures (13) sont connectées à la gorge longitudinale (10) au niveau des points de virage du zigzag situés axialement à l'intérieur, et
des gorges latérales axialement extérieures (14) s'étendent axialement vers l'extérieur depuis des points de virage du zigzag de la gorge longitudinale (10) situés axialement vers l'extérieur (10y).

3. Bandage pneumatique du type poids-lourd selon la revendication 1 ou 2, dans lequel
les points d'intersection des lignes centrales, dans le sens de la largeur, des gorges obliques axialement intérieures (13) et la bordure axialement intérieure de la gorge longitudinale (10) sont respectivement décalés depuis lesdits points axialement intérieurs (10x) de la paroi d'isolation sonore (17) dans la direction circonférentielle du pneumatique à raison de 1 à 3 mm.

4. Bandage pneumatique du type poids-lourd selon la revendication 3, dans lequel
lesdites gorges obliques axialement intérieures (13) sont inclinées vers une direction circonférentielle depuis la gorge longitudinale (10) vers l'intérieur en sens axial, et
lesdits points d'intersection sont décalés depuis lesdits points axialement intérieurs (10x) de la paroi d'isolation sonore (17) vers ladite direction circonférentielle.

5. Bandage pneumatique du type poids-lourd selon l'une quelconque des revendications 1 à 4, dans lequel
le nombre desdites gorges obliques axialement intérieures (13) connectées à chacune desdites gorges longitudinales (10) est de 35 à 65.

6. Bandage pneumatique du type poids lourd selon l'une quelconque des revendications 1 à 5, dans lequel
la portion formant bande de roulement (2) est dotée d'au moins une gorge longitudinale additionnelle (9, 11) qui n'est pas dotée de la paroi d'isolation sonore.

7. Bandage pneumatique du type poids-lourd selon la revendication 6, dans lequel
ladite au moins une gorge longitudinale additionnelle (9, 11) est disposée entre lesdites gorges longitudinales (13) dotées de la paroi d'isolation sonore (17).
